# EUROPEAN PATENT APPLICATION

(11) **EP 4 546 511 A1**
(43) Date of publication of application: **30.04.2025**
(21) Application number: 23873053.5
(22) Date of filing: 26.09.2023
(51) Int. Cl.: H01M 10/6568, H01M 50/682, H01M 10/6556, H01M 10/647, H01M 10/613, H01M 50/211

(54) **COOLING MEMBER AND BATTERY PACK COMPRISING SAME**

(30) Priority: 30.09.2022 KR 20220125134
(71) Applicant: LG Energy Solution, Ltd., Seoul 07335 (KR)
(72) Inventor: YU, Sanghyun, Daejeon 34122 (KR); NAMGOUNG, Hyeok, Daejeon 34122 (KR); CHO, Young Bum, Daejeon 34122 (KR); YOON, Han Ki, Daejeon 34122 (KR); JANG, Minseok, Daejeon 34122 (KR)
(74) Representative: Plasseraud IP
(86) International application number: PCT/KR2023/014726
(87) International publication number: WO 2024/071938

(57) **Abstract**

A cooling member according to one embodiment of the present disclosure is a cooling member mounted on a battery cell stack in which a plurality of battery cells are stacked, the cooling member comprising: an upper plate, a lower plate, and a coolant embedded in an inner space between the upper plate and the lower plate; and at least one of an upper structure supporting the upper plate and a lower structure supporting the lower plate, wherein the upper plate and the lower plate are composed of a material that can be melted or broken when a thermal event occurs in the battery cell, and wherein the upper structure and the lower structure are composed of materials that maintain rigidity when a thermal event occurs in the battery cell.

## Description

### [TECHNICAL FIELD]

### Cross Citation with Related Application(s)

This application claims priority to and the benefit of Korean Patent Application No. 10-2022-0125134 filed on September 30, 2022 with the Korean Intellectual Property Office, the disclosure of which is incorporated herein by reference in its entirety.

The present disclosure relates to a battery module and battery pack comprising a cooling part, and more particularly, to a cooling member with reinforcement structure and a battery pack comprising the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, being freely charged and discharged, and having very low self-discharge rate and high energy density.

Meanwhile, in the case of a secondary battery used for small-sized devices, two to three battery cells are used, but in the case of a secondary battery used for a medium- and large-sized device such as automobiles, a medium- or large-sized battery module in which a large number of battery cells are electrically connected is used. Since the medium- or large-sized battery module is preferably manufactured with as small a size and weight as possible, a prismatic battery, a pouch-type battery, or the like, which can be stacked with high integration and has a small weight relative to capacity, is mainly used as a battery cell of the medium- or large-sized battery module.

On the other hand, battery cells mounted in battery module can generate a large amount of heat in a charge and discharge process. If the temperature becomes higher than the proper temperature due to reasons such as overcharging, performance may deteriorate, and if the temperature rise is excessive, there may be a risk of an explosion or ignition. If an ignition phenomenon occurs inside the battery module, high-temperature heat, gas, or flame may be emitted to the outside of the battery module, wherein the heat, gas, spark, flame or the like emitted from one battery module may be transmitted to other adjacent battery modules at a narrow interval within the battery pack, which can lead to a cascading thermal runaway phenomenon within the battery pack.

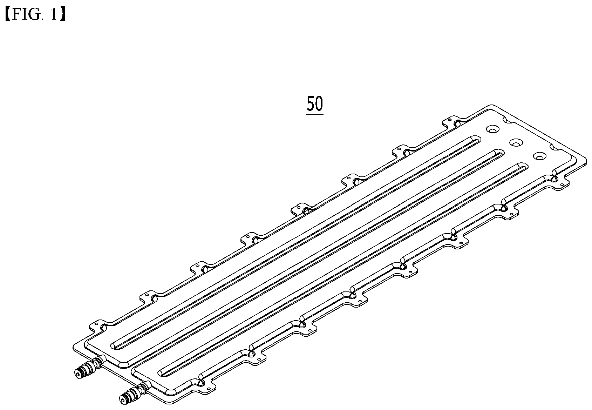

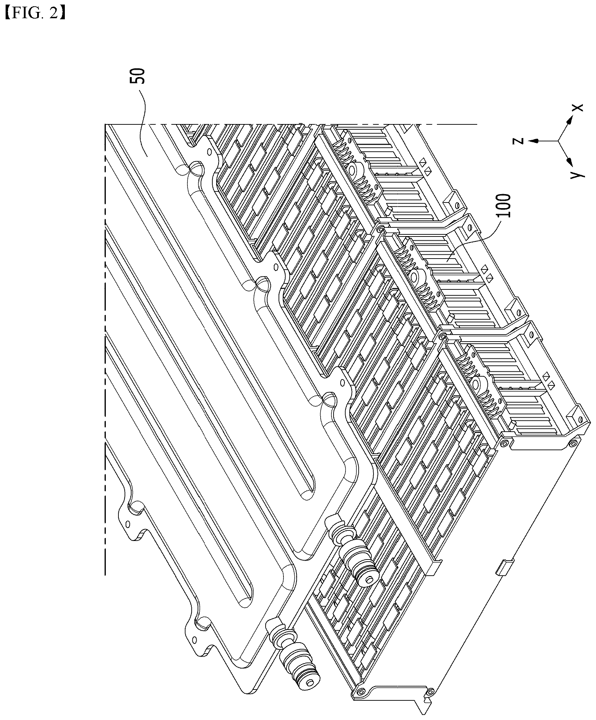

In order to prevent such a thermal runaway phenomenon, attempts have recently been made to apply a water-cooled type cooling member or a water-cooled type heat dissipation member into which a coolant is injected. FIGS. 1 and 2 are perspective views each illustrating a cooling member according to a conventional technique and a portion of a battery pack including the same. The cooling member 50 may be provided to lower the internal temperature of a battery module or battery pack including battery cells. The cooling member 50 may be a coolant or a water-cooled type cooling member 50 into which a coolant is injected. As the cooling member 50 is provided into a water-cooled type, the cooling efficiency of the cooling member 50 can be maintained uniformly, and battery cells within a battery module or battery pack can be cooled evenly. On the other hand, the cooling member 50 according to the conventional technique is made of a metal material such as aluminum to enable heat transfer. For example, the cooling member 50 is formed by joining two sheets of metal plates together using a brazing method or the like.

On the other hand, since the cooling member 50 according to the conventional technique is composed of a metal material, it may be slightly heavy. When filled with a coolant (cooling water), its weight further increases. When the battery pack including the cooling member 50 is mounted on an automobile or the like, its driving fuel efficiency or the like may be slightly reduced. However, when the cooling member 50 is fabricated by injection molding of plastic or the like in order to reduce the weight, there is a problem that its rigidity is reduced.

Therefore, there is a demand for the development of a cooling member that realizes the weight reduction and cost reduction while further increasing the rigidity of a heat dissipation member, and facilitates production.

### [DETAILED DESCRIPTION OF THE INVENTION]

### [Technical Problem]

Therefore, the present disclosure was designed to solve the problems as above, and an object of the present disclosure is to provide a cooling member that can inject a coolant in the right time and the right place when an internal fire occurs in a battery module or a battery pack, and a battery pack including the cooling member. More specifically, it is an object of the present disclosure to provide a cooling member that realizes the weight reduction and cost reduction while further improving the rigidity, and facilitates production, and a battery pack including the same.

However, the technical problems to be solved by embodiments of the present disclosure are not limited to the above-described problems, and can be variously expanded within the scope of the technical idea included in the present disclosure.

### [Technical Solution]

According to an embodiment of the present disclosure, there is provided a cooling member mounted on a battery cell stack in which a plurality of battery cells are stacked, the cooling member comprising: an upper plate, a lower plate, and a coolant embedded in an inner space between the upper plate and the lower plate; and at least one of an upper structure supporting the upper plate and a lower structure supporting the lower plate, wherein the upper plate and the lower plate are composed of a material that can be melted or broken when a thermal event occurs in the battery cell, and wherein the upper structure and the lower structure are composed of materials that maintain rigidity when a thermal event occurs in the battery cell.

The upper structure may be mounted on the outer surface of the upper plate, and the lower structure may be mounted on the outer surface of the lower plate.

**In** the upper plate, a portion not contacting with the upper structure forms a fragile part, in the lower plate, a portion not contacting with the lower structure forms the fragile part, and the fragile part is melted or broken when a thermal event of the battery cell occurs, thereby allowing the coolant to be injected into the battery cell.

At least one of the upper plate and the lower plate is produced by plastic injection molding, and at least one of the upper structure and the lower structure may be composed of a metal material.

At least one of the upper plate and the lower plate may be composed of **PP** or PE, and at least one of the upper structure and the lower structure may be composed of stainless steel, aluminum, copper, or an alloy containing them.

The upper structure may include at least one of: a vertical bar mounted in the vertical direction of the upper plate and disposed in parallel to the long side; a horizontal bar mounted in the horizontal direction of the upper plate and disposed in parallel to the short side; and an edge part mounted along the edge of the upper plate.

The upper plate includes a groove on which the upper structure is mounted, a step low in height is formed along the edge of the upper plate, and the structure and shape of the upper structure and the structure and shape of the groove and the edge of the upper plate may correspond and engage with each other.

The grooves of the upper plate may comprise: a first groove formed in the center of the upper plate and disposed in parallel to a long side of the upper plate; second grooves formed on both sides of the first groove and disposed in parallel to the long side of the upper plate; and a third groove that intersects with the first groove and the second groove and is disposed in parallel to a short side of the upper plate.

The vertical bar of the upper structure may be mounted in the first groove and the second groove of the upper plate, and the horizontal bar of the upper structure may be mounted in the third groove of the upper plate.

The cooling member further comprises an inlet port and an outlet port through which a coolant flows in and out of a first short side among the two short sides of the cooling member, wherein one end of the first groove of the upper plate contacts with the first short side, and wherein the other end of the first groove of the upper plate may be spaced apart from the second short side of the cooling member by a prescribed distance, so that the coolant flows in a U-shape in the inner space of the cooling member.

Both ends of the second groove of the upper plate may be spaced from each of the first short side and the second short side by a prescribed distance, so that the coolant can flow in the inner space of the cooling member.

The third groove of the upper plate and the horizontal bar of the upper structure may be respectively configured in a plurality of numbers.

The lower structure may include at least one of: a horizontal bar mounted in the horizontal direction of the lower plate and disposed in parallel to the long side; a vertical bar mounted in the vertical direction of the lower plate and disposed in parallel to the short side; and an edge part mounted along the edge of the lower plate.

The upper plate may include a groove on which the lower structure is mounted, a step low in height is formed along the edge of the lower plate, and the structure and shape of the lower structure and the structure and shape of the groove and the edge of the lower plate may correspond and engage with each other.

The grooves of the lower plate may comprise: a fourth groove disposed in parallel to the long side of the lower plate; and a fifth groove that intersects with the fourth groove and is disposed in parallel to the short side of the lower plate.

The vertical bar of the lower structure may be mounted in the fourth groove of the lower plate, and the horizontal bar of the lower structure may be mounted in the fifth groove of the lower plate.

The fourth groove of the lower plate and the vertical bar of the lower structure are respectively configured in a plurality of numbers, or the fifth groove of the lower plate and the horizontal bar of the lower structure may be respectively configured in a plurality of numbers.

The cooling member may further comprise a sealing pad disposed between the upper plate and the lower plate, so that the coolant does not leak to the outside of the cooling member.

The lower plate, the lower plate, and the sealing pad may be fastened by a rivet or a bolt together.

The upper plate and the lower plate may be integrally formed.

The cooling member may further comprise: an inlet port through which the coolant flows into the inside of the cooling member, and an outlet port through which the coolant flows out from the inside of the cooling member.

The cooling member may be mounted on the upper surface of the battery cell stack.

According to another embodiment of the present disclosure, there is provided a battery pack comprising the cooling member.

### [Advantageous Effects]

The cooling member according to embodiments of the present disclosure opens a part of the battery module or battery pack when internal fires occur, and injects a coolant in the right time and the right place, thereby making it possible to quickly extinguish internal fires in the battery module or battery pack and prevent cascading thermal runaway phenomena.

Further, the cooling member according to embodiments of the present disclosure has the advantage that it realizes weight reduction and cost reduction while further increasing rigidity, and facilitates production.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

FIGS. 1 and 2 are perspective views each illustrating a cooling member according to the conventional technique and a portion of a battery pack including the same;
FIG. 3 is an exploded perspective view illustrating a battery pack according to an embodiment of the present disclosure;
FIG. 4 is a perspective view of a battery module included in the battery pack according to FIG. 3;
FIG. 5 is a perspective view of a cooling member included in the battery pack according to FIG. 3 and a battery module disposed in a lower part of the cooling member;
FIG. 6 is a partially enlarged view of FIG. 5;
FIG. 7 is an exploded perspective view of the cooling member of FIG. 5;
FIG. 8 is a perspective view of the upper plate of the cooling member of FIG. 5;
FIG. 9 is a perspective view of the lower plate of the cooling member of FIG. 5;
FIG. 10 is a perspective view of the upper structure of the cooling member of FIG. 5;
FIG. 11 is a perspective view of the lower structure of the cooling member of FIG. 5;
FIG. 12 is a perspective view of the sealing pad of the cooling member of FIG. 5;
FIG. 13 is a diagram illustrating a method of injecting coolant into a cooling member when a thermal event occurs in a battery cell;
FIG. 14 is an enlarged view illustrating a part of the coolant flow; and
FIGS. 15 to 19 are diagrams illustrating the process of assembling the cooling member of FIG. 5.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not necessarily mean the certain part "above" or "on" toward an opposite direction of gravity.

Meanwhile, similar to the case where it is described as being formed or disposed "on" or "above" another part, the case where it is described as being formed or disposed "below" or "under" another part will also be understood with reference to the above-mentioned contents.

Further, since the upper surface/lower surface of a specific member can be determined differently depending on which direction is used as a reference, throughout the description, 'upper surface' or 'lower surface' is defined as meaning two facing surfaces on the z-axis of the corresponding member.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Now, a battery pack according to an embodiment of the present disclosure will be described.

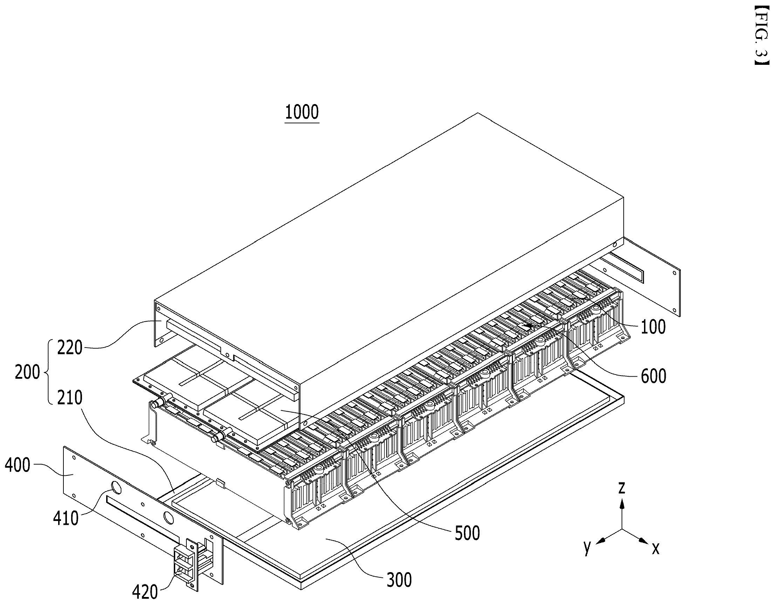

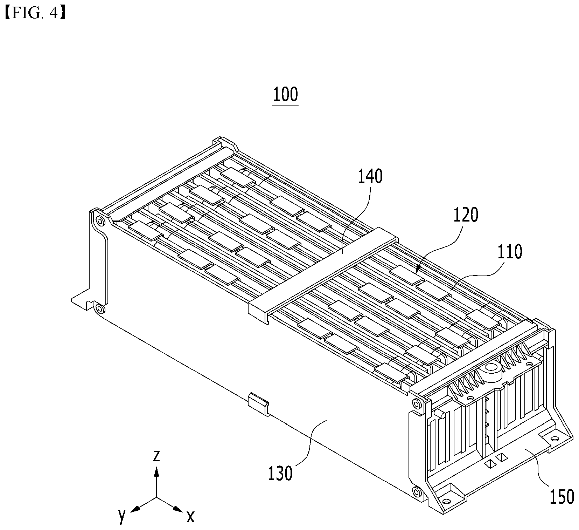

FIG. 3 is an exploded perspective view illustrating a battery pack according to an embodiment of the present disclosure. FIG. 4 is a perspective view of a battery module included in the battery pack according to FIG. 3.

Referring to FIG. 3, the battery pack 1000 according to an embodiment of the present disclosure may include at least one battery module 100, a pack frame 200 that houses the battery module 100, a resin layer 300 formed on the inner surface of the pack frame 200, an end plate 400 that closes the open side of the pack frame 200, a cooling member 500 disposed between the pack frame 200 and the battery cell stack 120, and a cooling fin 600 that contacts with the battery cell 110 and thus dissipates heat from the battery cell 110. However, the components included in the battery pack 1000 are not limited thereto, and depending on the design, the battery pack 1000 may be provided in a state in which a part of the above-mentioned components is omitted, or may be provided in a state in which other components not mentioned are added.

Referring to FIGS. 3 and 4, the battery module 100 provided in the present embodiment may have a module-less structure in which the module frame is omitted.

Typically, conventional battery packs have a double assembly structure in which battery cell stacks and several components connected thereto are assembled to form a battery module, and the plurality of battery modules are housed in the battery pack again. At this time, since the battery module comprises a module frame or the like that forms its outer surface, conventional battery cells are doubly protected by the module frame of the battery module and the pack frame of the battery pack. However, such a double assembly structure not only increases the manufacturing unit cost and the manufacturing process of the battery pack, but also has a disadvantage that reassembly performance is deteriorated when defects occur in some battery cells. Further, when a cooling member or the like which is the cooling member exists outside the battery module, there is a problem that a heat transfer path between the battery cell and the cooling member becomes slightly complicated.

Thus, the battery module 100 of the present embodiment can be provided in the form of a 'cell block' in which the module frame is omitted, and the battery cell stacks 120 included in the cell block may be directly coupled to the pack frame 200 of the battery pack 1000. Thereby, the structure of the battery pack 1000 can be made simpler, advantages in terms of manufacturing cost and manufacturing process can be obtained, and the weight reduction of the battery pack can be attained.

Hereinafter, the battery module 100 having no module frame can be referred to as a 'cell block' to distinguish it from a battery module having a module frame. However, the battery module 100 collectively refers to having a battery cell stack 120 segmented into prescribed units for modularization regardless of the presence or absence of a module frame, and the battery module 100 should be interpreted as including both a conventional battery module having a module frame and a cell block.

Referring to FIG. 4, the battery module 100 of the present embodiment may comprise a battery cell stack 120 in which a plurality of battery cells 110 are stacked along one direction, side surface plates 130 located at both ends in the stacking direction of the battery cell stack 120, a holding strap 140 that wraps around the side surface plate 130 and the battery cell stack 120 to fix their shape, and a busbar frame 150 that covers a front surface and a rear surface of the battery cell stack 120.

On the other hand, the battery module 100 provided in the form of a cell block is illustrated in FIG. 4, but the contents of this figure do not exclude the case where the battery module 100 of a closed type structure having a module frame is applied to the battery pack 1000 of the present embodiment.

The battery cells 110 each may include an electrode assembly, a cell case, and an electrode lead that protrudes from the electrode assembly. The battery cell 110 may be provided in a pouch shape or a prismatic shape that can maximize the number of stacks per unit area. For example, **the battery** cell 110 provided in a pouch shape can be produced by housing an electrode assembly including a cathode, an anode and a separator in a cell case of a laminate sheet and then heat-sealing the sealing part of the cell case. On the other hand, FIGS. 3 and 4 illustrate that the cathode lead and the anode lead of the battery cell 110 protrude in opposite directions to each other, but this is not necessarily the case, and the electrode leads of the battery cell 110 can also protrude in the same direction.

The battery cell stack 120 may be formed by stacking a plurality of electrically connected battery cells 110 along one direction. The direction in which a plurality of battery cells 110 are stacked (hereinafter referred to as 'stacking direction') may be the y-axis direction as illustrated in FIGS. 3 and 4 (alternatively, it may be the -y axis direction, and hereinafter, the expression 'axis direction' can be interpreted as including both +/- directions).

On the other hand, the battery cells 110 are disposed along one direction, so that the electrode leads of the battery cells 110 can be located on one surface of the battery cell stack 120, or on the other surface facing the one surface. In this manner, the surface on which the electrode leads are located in the battery cell stack 120 may be referred to as a front surface or a rear surface of the battery cell stack 120, and in FIGS. 3 and 4, the front surface and the rear surface of the battery cell stack 120 are illustrated as two surfaces facing each other on the x-axis.

Further, the surface on which the outermost battery cell 110 is located in the battery cell stack 120 may be referred to as a side surface of the battery cell stack 120, and in FIGS. 3 and 4, the side surface of the battery cell stack 120 is illustrated as two surfaces facing each other on the y-axis.

The side surface plate 130 may be provided to maintain the overall shape of the battery cell stack 120. The side surface plate 130 is a plate-shaped member, and can complement the stiffness of the cell block instead of the module frame. The side surface plates 130 may be disposed at both ends in the stacking direction of the battery cell stack 120, and can contact with the outermost battery cells 110 on both sides of the battery cell stack 120.

The side surface plate 130 may be prepared from various materials, and may be provided through various preparation methods. **In** one example, the side surface plate 130 may be a plastic material made by injection molding. **In** another example, the side surface plate 130 may be made from a leaf spring material. **In** yet another example, the side surface plate 130 may be made from a material having elasticity that allows its shape to partially deform in response to the volume change of the battery cell stack 120 due to swelling.

The holding strap 140 may be for fixing the position and shape of the side surface plates 130 at both side ends of the battery cell stack 120. The holding strap 140 may be a member having a length and a width. Specifically, the battery cell stack 120 may be located between the two side surface plates 130 that make contact with the outermost battery cell 110, and the holding strap 140 may cross the battery cell stack 120 and connect the two side surface plates 130. Thereby, the holding strap 140 can prevent the distance between the two side surface plates 130 from increasing beyond a certain range, thereby maintaining the overall shape of the cell block within a certain range.

The holding strap 140 may have hooks at both ends in the longitudinal direction for stable coupling with the side surface plate 130. The hooks may be formed by bending both ends in the longitudinal direction of the holding strap 140. Meanwhile, the side surface plate 130 may be formed with a hooking groove at a position corresponding to the hook, and the holding strap 140 and the side surface plate 130 can be stably coupled through the coupling of the hook and the hooking groove.

The holding strap 140 may be provided with various materials or through various preparation methods. **In** one example, the holding strap 140 can be prepared from a material having elasticity, so that the volumetric change of the battery cell stack 120 due to swelling can be permitted within a certain range.

On the other hand, the holding strap 140 is for fixing the relative position between the side surface plate 130 and the battery cell stack 120, and if its purpose as a 'fixing member' is achieved, it can be provided in a configuration different from those illustrated. For example, the fixing member may be provided in the form of a long bolt that can cross between the two side surface plates 130, that is, a long bolt. The side surface plate 130 may be provided with a groove into which a long bolt can be inserted, and the long bolt can simultaneously couple the two side surface plates 130 through the groove, thereby fixing the relative position of the two side surface plates 130. The long bolt may be provided at an edge of the side surface plate 130, preferably at a position close to a vertex of the side surface plate 130. Depending on the design, it would be possible to replace the holding strap 140 with the above-mentioned long bolt, but it would also be possible to provide both the holding strap 140 and the long bolt in the cell block.

The busbar frame 150 is located on one surface of the battery cell stack 120, so that it can cover one surface of the battery cell stack 120, and simultaneously guide a connection between the battery cell stack 120 and an external device. The busbar frame 150 may be located on the front surface or the rear surface of the battery cell stack 120. The busbar frames 150 may be provided so as to be located on the front surface and the rear surface of the battery cell stack 120. A busbar may be mounted to the busbar frame 150, whereby the electrode leads of the battery cell stack 120 can be connected to the busbar, and thus, the battery cell stack 120 can be electrically connected to an external device.

The busbar frame 150 may include an electrically insulating material. The busbar frame 150 can limit the contact of the busbar with other portions of the battery cells 110 other than the portions joined to the electrode leads, and prevent an electrical short circuit from occurring.

The pack frame 200 can be for protecting the battery module 100 and electrical components connected thereto from external physical impacts. The pack frame 200 may house the battery module 100 and electrical components connected thereto in the inner space of the pack frame 200. Here, the pack frame 200 includes an inner surface and an outer surface, and the inner space of the pack frame 200 may be defined by the inner surface.

The battery module 100 housed within the pack frame 200 may be formed in a plurality of numbers. The plurality of battery modules 100 may be referred to as a 'module assembly'. The battery modules may be arranged in rows and columns within the pack frame 200. Here, 'row' may refer to a set of battery modules 100 arranged in one direction, and 'column' may refer to a set of battery modules 100 arranged in a direction perpendicular to the one direction. For example, the battery modules 100 may be arranged along the stacking direction of the battery cell stack to form a module assembly in one row or column as shown in FIG. 3.

The pack frame 200 can be provided in a hollow shape that is opened along one direction. For example, as shown in FIG. 3, a plurality of cell modules 100 are successively located along the stacking direction of the battery cells 110, and the pack frame 200 can have a hollow shape that is opened along the above-mentioned stacking direction.

The pack frame 200 may have various structures. In one example, as shown in FIG. 3, the pack frame 200 may include a lower frame 210 and an upper frame 220. Here, the lower frame 210 may be provided in a plate shape, and the upper frame 220 may be provided in a U-shape. At least one battery module 100 may be arranged in the plate-shaped lower frame 210, and a U-shaped upper frame 220 may be provided so as to wrap the upper surface and two side surfaces of the module assembly on the x-axis.

The pack frame 200 may include a portion with high thermal conductivity to rapidly dissipate heat generated in the inner space to the outside. For example, at least a part of the pack frame 200 may be made from a metal having high thermal conductivity, and examples thereof include aluminum, gold, silver, copper, platinum, alloys containing them, and the like. In addition, the pack frame 200 may have a partially electrical insulating properties, and an insulating film may be provided or an insulating paint may be applied at positions where insulation is required. In the pack frame 200, a portion to which an insulating film or insulating paint is applied may be referred to as an insulating portion.

A resin layer 300 may be provided between the battery module 100 and the inner surface of the pack frame 200. The resin layer 300 may be provided between the bottom surface of the battery module 100 and the lower frame 210. The resin layer 300 can be provided between the upper surface of the battery module 100 and the upper frame 220. Here, specifically, the resin layer 300 may be provided between the cooling member 500 and the upper frame 220, which will be described later.

The resin layer 300 may be formed by injecting a resin between the battery cell stack 120 and one of the inner surfaces of the pack frame 200. However, it is not necessarily the case, and the resin layer 300 may be a member provided in a plate shape.

The resin layer 300 can be made from various materials, and the function of the resin layer 300 can vary depending on the material. For example, the resin layer 300 may be formed from an insulating material, and electron transfer between the battery module 100 and the pack frame 200 can be prevented through the insulating resin layer 300. In another example, the resin layer 300 may be formed of a thermally conductive material. The resin layer 300 made of a thermally conductive material transfers heat generated in the battery cell 110 to the pack frame 200, so that heat can be released/transferred to the outside. In another example, the resin layer 300 may include an adhesive material, through which the battery module 100 and the pack frame 200 can be fixed to each other. In a specific example, the resin layer 300 may be provided so as to include at least one of a silicone-based material, a urethane-based material, and an acrylic-based material.

The end plate 400 can be for protecting the battery module 100 and the electrical components connected thereto from external physical impact by sealing the open surface of the pack frame 200. Each edge of the end plate 400 can be coupled to a corresponding edge of the pack frame 200 by a method such as welding. The end plates 400 can be provided in two numbers so as to seal two open surfaces of the pack frame 200, and may be made of a metal material having a prescribed strength.

An opening 410 may be formed in the end plate 400 to expose the inlet/outlet ports 530 of the cooling member 500, which will be described later, and a connector 420 for low voltage (LV) connection or high voltage (HV) connection with an external device can be mounted.

The cooling member 500 may be for cooling the inside of the battery pack 1000 by dissipating heat generated from the battery cells 110. Considering that high-temperature air or gas emitted when the battery cell 110 ignites mainly moves in the opposite direction to gravity, the cooling member 500 may be preferably located at the upper part of the battery cells 110 as illustrated in FIG. 3. However, it is not necessarily the case, and the cooling member 500 can be located at the lower part of the battery cells 110 according to various design reasons.

The cooling member 500 may be a water-cooled type cooling member 500 into which a coolant, for example, cooling water is injected. At this time, the coolant used for the cooling member 500 can be used without limitation as long as it can dissipate the heat of the battery cells 110 by moving along the flow path inside the cooling member 500.

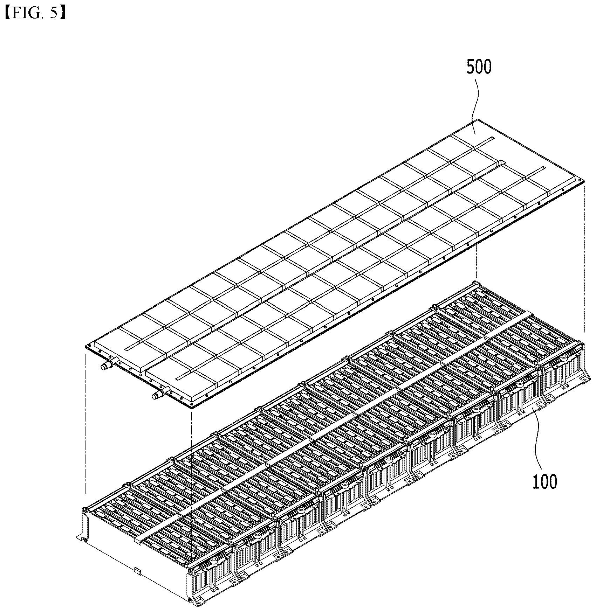

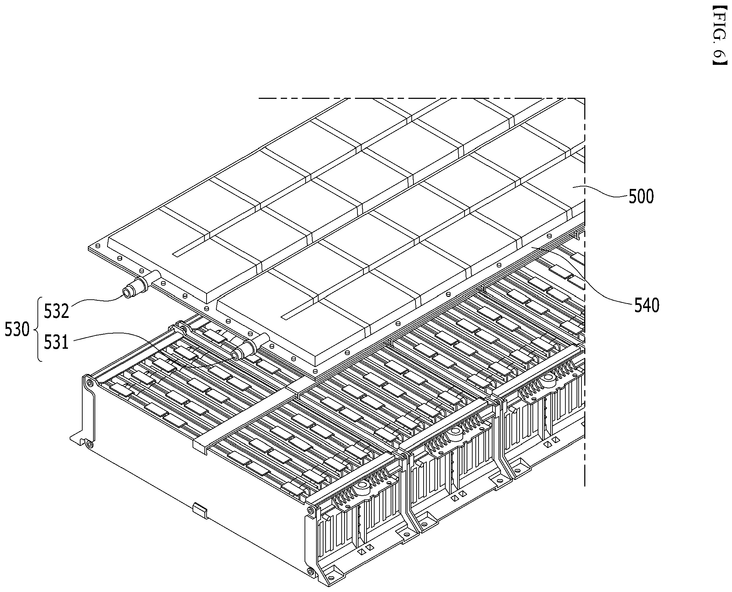

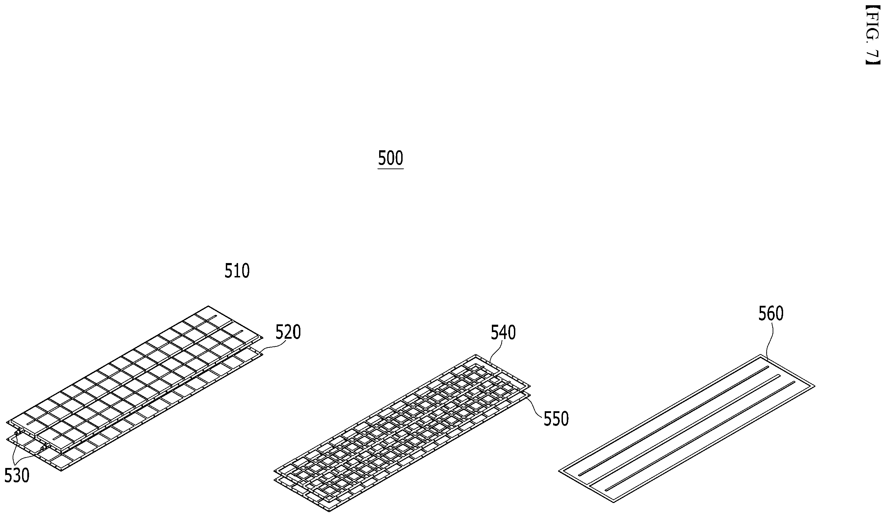

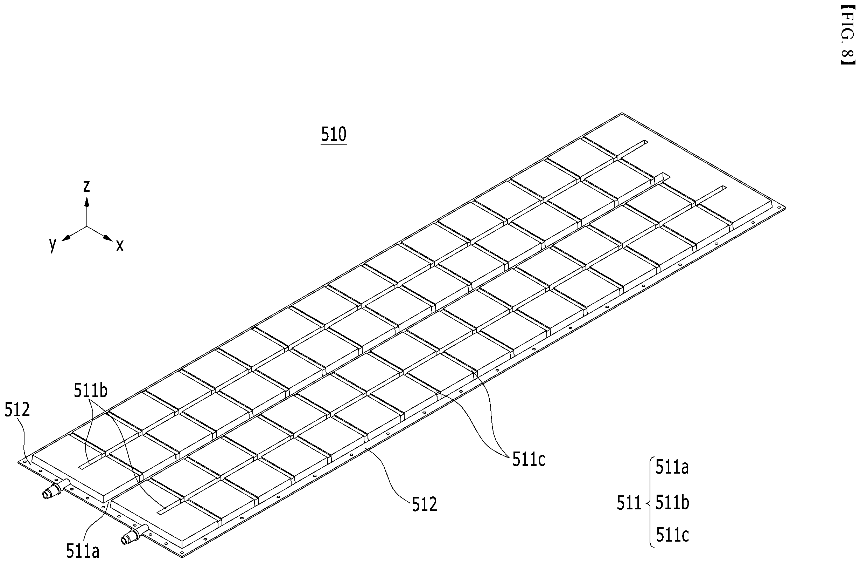

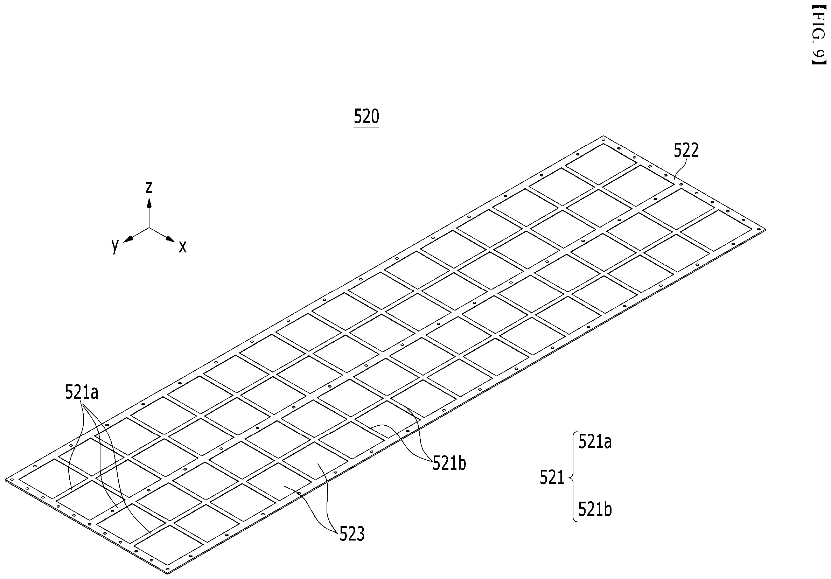

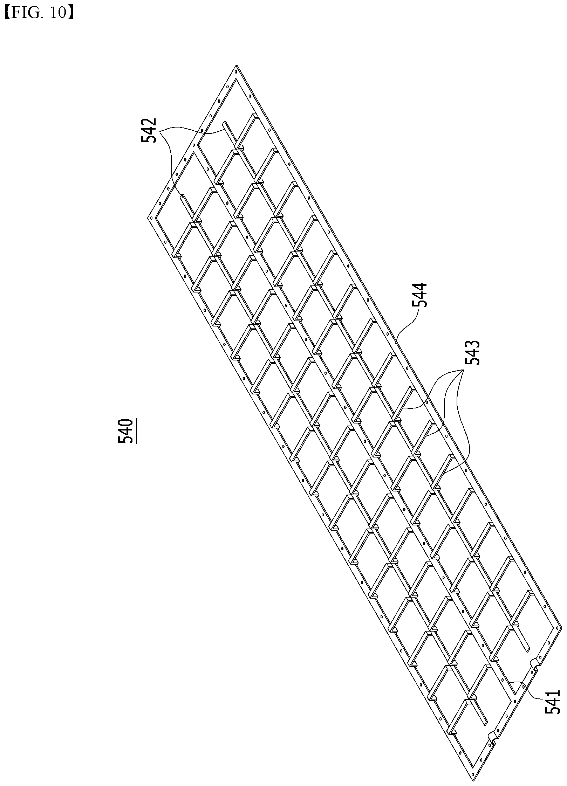

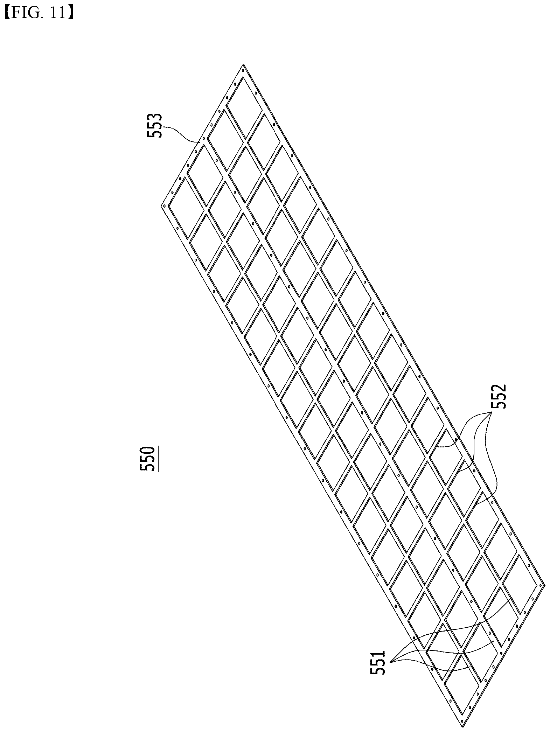

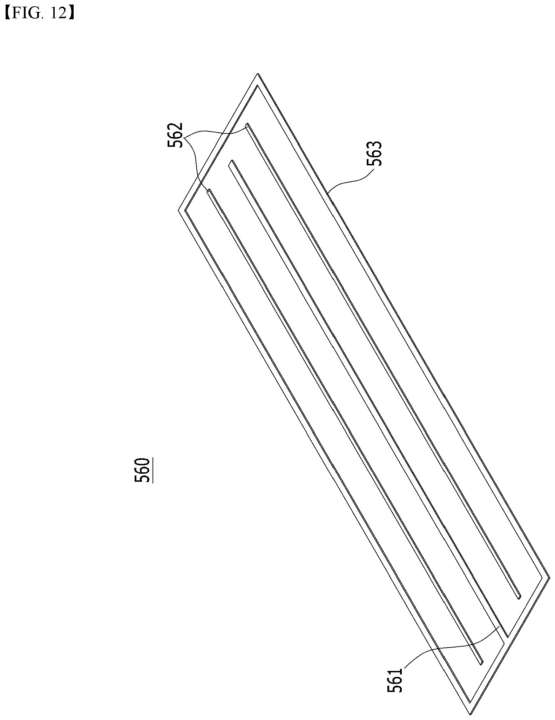

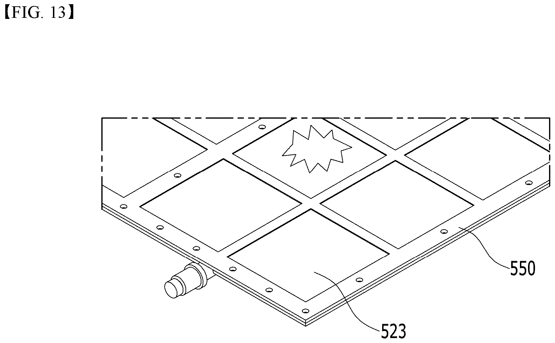

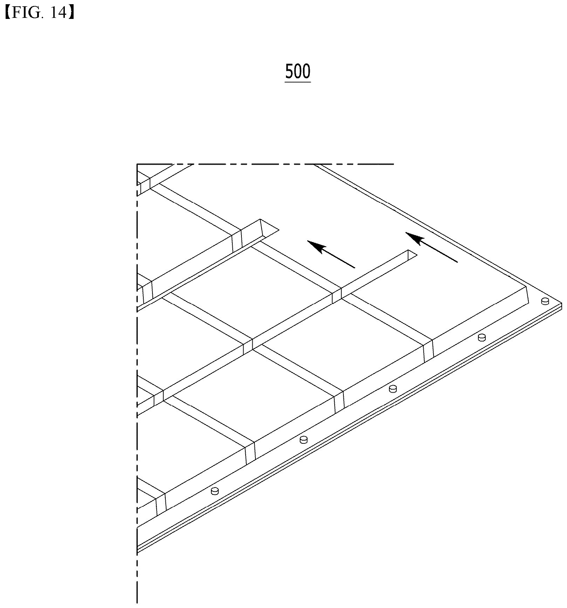

FIG. 5 is a perspective view of a cooling member included in the battery pack according to FIG. 3 and a battery module disposed in a lower part of the cooling member. FIG. 6 is a partially enlarged view of FIG. 5. FIG. 7 is an exploded perspective view of the cooling member of FIG. 5. FIGS. 8 and 9 are perspective views of the upper plate and the lower plate of the cooling member of FIG. 5. FIGS. 10 and 11 are perspective views of the upper structure and the lower structure of the cooling member of FIG. 5. FIG. 12 is a perspective view of the sealing pad of the cooling member of FIG. 5. FIG. 13 is a diagram illustrating a method of injecting coolant into a cooling member when a thermal event occurs in a battery cell. FIG. 14 is an enlarged view illustrating a part of the coolant flow.

Referring to FIGS. 5 to 7, more specifically, referring to FIG. 7, the cooling member 500 may include an upper plate 510, a lower plate 520 and an inlet/outlet ports 530. The cooling member 500 may be formed by coupling the upper plate 510 and the lower plate 520. An empty space may be formed between the coupled upper plate 510 and lower plate 520, and coolant can be injected into the empty space through the inlet/outlet ports 530. The coolant may be supplied through the inlet port 531 and discharged to the outlet port 532. Further, the cooling member 500 may further comprise an upper structure 540 supporting the upper plate 510, and a lower structure 550 supporting the lower plate 520.

Referring to FIGS. 8 and 9, grooves 511 and 521 are formed on the outer surface of the upper plate 510 and the outer surface of the lower plate 520, respectively. Here, the outer surface refers to the outer surface of the cooling member 500 when the upper plate 510 and the lower plate 520 are coupled to form the cooling member 500.

The upper structure 540 illustrated in FIG. 10 and the lower structure 550 illustrated in FIG. 11 are mounted in the groove 511 of the upper plate 510 and the groove 521 of the lower plate 520, respectively, and the flow of coolant (cooling water) can be determined by the structure of the grooves 511 and 521. FIG. 5 shows, as an illustrate example thereof, that the flow of coolant (cooling water) is formed in a U-shape by the grooves 511 and 521 formed in the cooling member 500.

For example, if explained based on the groove 511 of the upper plate 510 of FIG. 7, the groove 511 includes a first groove 511a located in the center in the vertical direction (y-axis direction) and two second grooves 511b arranged on both sides with reference to the first groove 511a. Further, the groove 511 includes one or more third grooves 511c in the horizontal direction orthogonal to the vertical direction. The third groove 511c intersects the first groove 511a and the second groove 511b.

The flow of coolant (cooling water) may be determined by the structure of the first groove 511a. More specifically, the first groove 511a extends in the vertical direction from the first short side provided with the inlet/outlet port 530 among the two short sides of the cooling member 500 at the central point between the inlet port 530 and the outlet port 530. At this time, the first groove 511a extends only to a point spaced from the second short side by a prescribed distance, which is the remaining short side among the two short sides of the cooling member 500. Thereby, a point at which coolant makes a detour (U-turn) is formed (see FIG. 14).

In summary, one end of the first groove 511a is in contact with the first short side provided with the inlet/outlet port 530, and the other end of the first groove 511a is spaced apart from the second short side by a prescribed distance. Thereby, the coolant flows into the inlet port 530, passes through the space between the end of the first groove 511a and the second short side, and flows out from the outlet port 530. Thereby, the flow of coolant (cooling water) within the cooling member 500 is formed in a U-shape.

Further, the bottom of the first groove 511a may be in contact with the lower plate 520. Thereby, the inside of the cooling member 500 may be largely divided into two sections: a section where the coolant flows into the inlet port 530 and flows to the detour point, and a section where the coolant flows from the detour point to the outlet port 530.

Of course, as will be described later, the upper structure 540 is mounted in the first groove 511a to supplement the rigidity of the cooling member 500.

The second groove 511b is provided to supplement the rigidity in the vertical direction of the cooling member 500. Two second grooves 511b are arranged in the vertical direction of the cooling member 500 on both sides of the first groove 511a, and both ends of the second groove 511b are spaced apart from the two short sides of the cooling member 500 by a prescribed distance. Thereby, the flow of the U-shaped coolant (cooling water) within the above-mentioned cooling member 500 is not obstructed (see FIG. 14). On the other hand, if the depth of the second groove 511b is slightly shallow and does not obstruct the flow of coolant in the inner space of the cooling member 500, that is, if it does not contact with the sealing pad 560 and/or the lower plate 520, which will be described later, both ends of the second groove 511b may contact with the two short sides of the cooling member 500.

The third groove 511c is also provided to increase the rigidity of the cooling member 500. One or more third grooves 511c are provided in the horizontal direction (x-axis direction) of the cooling member 500. In the embodiments of FIGS. 5 to 7, a case where the third grooves 511c are provided in a plurality of numbers is illustrated. The third groove 511c is provided to supplement the rigidity in the horizontal direction of the cooling member 500. Both ends of the third groove 511c contact with the two long sides of the cooling member 500, respectively. At this time, the depth of the third groove 511c is shallower than the depth of the first groove 511a so that the U-shaped flow of coolant is not obstructed by the third groove 511c.

Further, the edge part 512 of the upper plate 510 has a step based on the cross section in the height direction of the upper plate 510 (based on the z-axis). That is, the height of the edge part 512 along the circumference of the upper plate 510 is lower than the height of the portion of the upper plate 510 through which the coolant flows. As will be described later, the height of the edge part 522 along the circumference of the lower plate 520 is lower than the height of the portion of the lower plate 520 through which the coolant flows. Thereby, the edge part 512 of the upper plate 510 and the edge part 522 of the lower plate 520 can contact and couple with each other, and a channel through which coolant flows is formed in the inner space between the upper plate 510 and the lower plate 520.

Referring to FIG. 10, the upper structure 540 may be mounted in the groove 511 formed on the outer surface of the upper plate 510. In this case, the outer surface of the upper plate 510 to which the upper structure 540 is coupled may have a generally flat configuration.

The upper structure 540 comprises at least one of: vertical bars 541 and 542 mounted in the vertical direction of the upper plate 510 and disposed in parallel to the long side, a horizontal bar 543 mounted in the horizontal direction of the upper plate 510 and disposed in parallel to the short side, and an edge part 544 mounted on the edge part 512 of the upper plate 510.

Further, the shape and structure of the upper structure 540 may wholly or partially match the shape and structure of the groove 511 and/or the shape and structure of the edge part 512. To elaborate, for example, the upper structure 540 includes a portion that matches at least one of the first groove 511a and the two second grooves 511b, and/or a portion that matches the third groove 511c and/or a portion that matches the edge part 512 of the upper plate 510.

In the embodiment of FIG. 10, illustratively, the upper structure 540 includes a first vertical bar 541 mounted to the first groove 511a in the center of the upper plate 510 and second vertical bars 542 respectively mounted to the two second grooves 511b of the upper plate 510, horizontal bars 543 mounted to the third grooves 511c of the upper plate 510, and an edge part 544 mounted to the edge part 512 of the upper plate 510.

The first vertical bars 541 and the second vertical bars 542 are disposed in parallel to the two long sides of the cooling member 500 along the vertical direction (y-axis direction) of the cooling member 500. One end of the first vertical bar 541 contacts with the first short side of the edge part 544 on which the inlet/outlet ports 530 is provided, and the other end of the first vertical bar 541 is spaced apart from the second short side by a prescribed distance. Both ends of the second vertical bars 542 are spaced apart from the two short sides of the edge part 544 by a prescribed distance. The horizontal bars 543 connect the two long sides of the cooling member 500 along the horizontal direction (x-axis direction) of the cooling member 500.

On the other hand, the cooling member 500 may be a cooling tank system without the inlet/outlet ports 530. Both ends of the first vertical bar 541 and the second vertical bar 542 may be configured to extend to the edge part 544 and contact each other. That is, it may have the same shape and structure as the lower structure 550, which will be described later. The present disclosure is not limited to those described above, and various modifications and changes can be made.

The grooves 521 of the lower plate 520 in FIG. 9 may have a quadrilateral (e.g., rectangular or square) lattice structure as a whole, which is slightly different from the grooves 511 of the upper plate 510 in FIG. 8. That is, the fourth grooves 521a connecting the two long sides of the cooling member 500 along the vertical direction (y-axis direction) of the cooling member 500 may be formed in a singular or plural number. That is, both ends of the fourth groove 521a contact with the two short sides, respectively. Further, the fifth grooves 521b connecting the two long sides of the cooling member 500 along the horizontal direction (x-axis direction) of the cooling member 500 may be formed in a singular or plural number. That is, both ends of the fifth groove 521b contact with two long sides, respectively.

Referring to FIG. 11, the lower structure 550 is mounted in the groove 521 formed on the outer surface of the lower plate 520, and the shape and structure of the lower structure 550 may wholly or partially match the shape and structure of the groove 521 and/or the shape and structure of the edge part 522.

The lower structure 550 includes at least one of: a vertical bar 551 mounted in the vertical direction of the lower plate 520 and disposed in parallel to the long side, a horizontal bar 552 mounted in the horizontal direction of the lower plate 520 and disposed in parallel to the short side, and an edge part 553 mounted on the edge part 522 of the lower plate 520.

In the embodiment of FIG. 11, illustratively, the lower structure 550 includes a plurality of vertical bars 551 respectively mounted to the plurality of fourth grooves 521a of the lower plate 520, and a plurality of horizontal bars 552 respectively mounted to the plurality of fifth grooves 521b of the lower plate 520, and an edge part 553 mounted to the edge part 522 of the lower plate 520. The vertical bar 551 connects the two short sides of the cooling member 500 along the vertical direction (y-axis direction) of the cooling member 500. The horizontal bar 552 connects the two long sides of the cooling member 500 to each other along the horizontal direction (x-axis direction) of the cooling member 500.

Referring to FIGS. 9 and 13, the portion surrounded by the fourth groove 521a and the fifth groove 521b forms a fragile part 523, which will be described later. A rigid lower structure 550 is mounted in the groove 521 of the lower plate 520. However, the fragile part 523 surrounded by the fourth groove 521a and the fifth groove 521b exist only a lower plate 520 which is injection-molded from a material such as plastic. Therefore, when a thermal event occurs in a battery cell contacting with the lower part of the cooling member 500, the fragile part 523, which is a portion where the rigid lower structure 550 is not mounted, melts, so that the coolant of the cooling member 500 is introduced into the battery module 100.

Referring to FIGS. 7 and 12, the sealing pad 560 is disposed between the upper plate 510 and the lower plate 520. Thereby, when the coolant flows in the inner space between the upper plate 510 and the lower plate 520, the sealing pad 560 prevents the coolant from flowing out to the outside of the cooling member 500.

In the embodiment of FIG. 12, the first vertical bar 561 of the sealing pad 560 matches the structure and shape of the first groove 511a of the upper plate 510, and is disposed between the bottom of the first groove 511a of the upper plate 510 and the upper part of the fourth groove 521a of the lower plate 520. The two second vertical bars 562 of the sealing pad 560 matches the structure and shape of the two second groove 511b of the upper plate 510, and is disposed between the bottom of second grooves 511b of the upper plate 510 and the upper part of the fourth grooves of 521a of the lower plate 520. The edge part 563 of the sealing pad 560 is disposed between the edge part 512 of the upper plate 510 and the edge part 522 of the lower plate 520.

On the other hand, the upper plate 510 and the lower plate 520 may be composed of a material that has chemical resistance caused by cooling water but does not have a high heat-resistant temperature so that it can be melted when a thermal event of the battery cell occurs, and for example, they may be composed of plastic material such as polypropylene (PP) or polyethylene (PE). The upper plate 510 and the lower plate 520 may be fabricated by injection molding, and can melt/break when a thermal event occurs in the battery cell. The upper structure 540 and the lower structure 550 are composed of a metal material having rigidity, and for example, they may be composed of stainless steel, aluminum, copper, or an alloy containing them. The upper structure 540 and the lower structure 550 allow the cooling member 500 to maintain its overall structure and shape. The sealing pad 560 may be composed of an elastic material such as, for example, a silicone-based foam pad, an acrylic-based foam pad, or a urethane-based foam pad.

Each component of the cooling member 500 described above with reference to FIGS. 5 to 13 corresponds to an illustrative example, and the present disclosure is not limited thereto. That is, various modifications and changes can be made in the structure, shape, arrangement, and the like of the cooling member 500 and each component of the cooling member 500, depending on the environment in which the invention is embodied.

For example, the above-mentioned grooves are not provided in the upper plate 510 and/or lower plate 520, and in the flat upper plate 510 and/or lower plate 520, only the upper structure 540 and/or lower structure 550 may surround the upper plate 510 and/or lower plate 520 or may also be attached on the upper plate 510 and/or the lower plate 520. Alternatively, various modifications and changes can be made, such as the upper structure 540 and/or lower structure 550 being mounted on the inner surface of the upper plate 510 and/or lower plate 520.

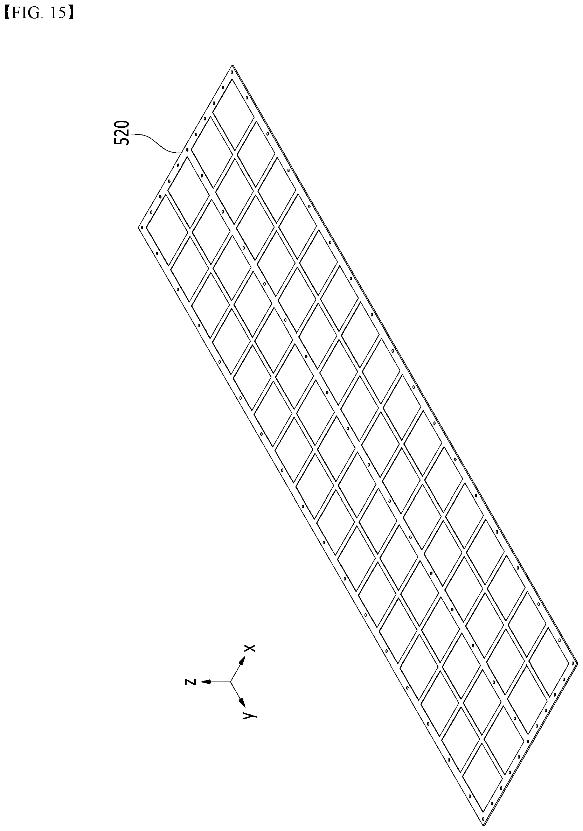

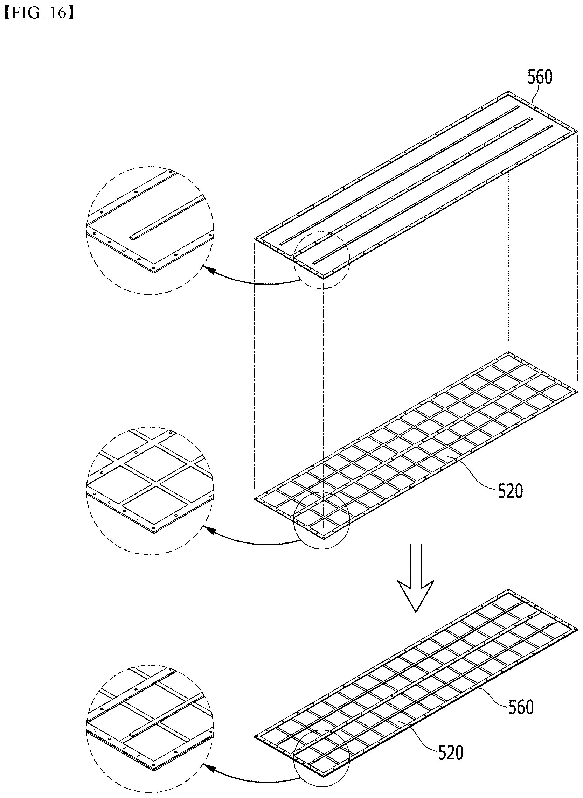

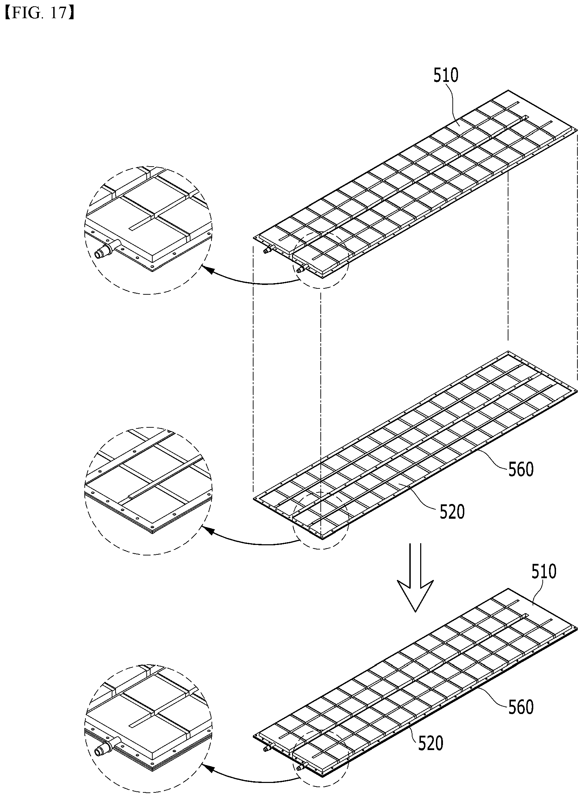

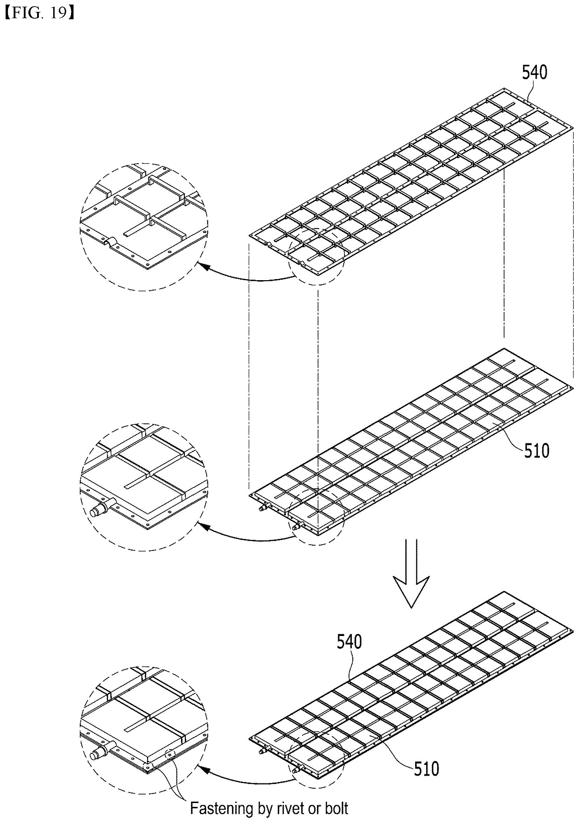

FIGS. 15 to 19 show a process of producing the cooling member 500 by assembling each component of the cooling member 500 of FIG. 5. First, a lower plate 520 is provided (FIG. 15). Next, the sealing pad 560 is seated on the inner surface (upper surface) of the lower plate 520 (FIG. 16). Next, the upper plate 510 is seated on the sealing pad 560 (FIG. 17). Here, for the arrangement of detailed components between the lower plate 520, the sealing pad 560, and the upper plate 510, refer to the explanations described above with reference to FIGS. 7 to 12.

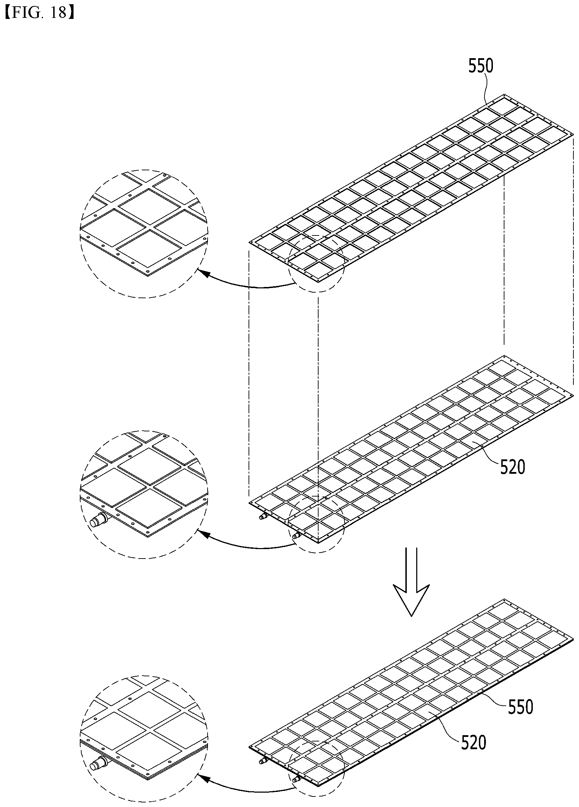

Next, the lower structure 550 is mounted on the outer surface of the lower plate 520 (FIG. 18). The assembly in which the lower plate 520, the sealing pad 560, and the upper plate 510 described above with reference to FIGS. 15 to 17 are connected is turned over and mounted on the lower structure 550, and then turned over again together with the lower structure 550. Alternatively, an assembly in which the lower plate 520, the sealing pad 560, and the upper plate 510 are connected may be mounted on the lower structure 550 as it is. Alternatively, the lower plate 520 may be mounted on the lower structure 550 in FIG. 15, and then the sealing pad 560 and upper plate 510 may be mounted in the manner described in FIGS. 16 and 17, respectively.

Finally, the upper structure 540 is mounted on the outer surface (upper surface) of the upper plate 510, and the lower structure 550 - lower plate 520 - sealing pad 560 - upper plate 510 - upper structure 540 are fastened with rivets, bolts, etc., thereby completing the manufacture of the cooling member 500.

On the other hand, the present disclosure is not limited to those described above, and in some cases, various modifications and variations can be made, such as, for example, the upper plate 510 and the lower plate 520 being integrally injection-molded without including the seal pad 56, and the upper structure 540 and the lower structure 550 being mounted on the outer surfaces of the upper plate 510 and the lower plate 520, respectively.

On the other hand, the above explanation has mainly been made about the cooling member 500 being provided outside the battery module 100, but this is not necessarily the case, and the cooling member 500 can be disposed inside the battery module 100. When the cooling member 500 is disposed inside the battery module 100, heat transfer between the cooling member 500 and the battery cells 110 can be easily achieved even if the battery module 100 has a closed type structure with a module frame.

As the cooling member 500 is provided to the battery pack 1000 or the battery module 100, heat generated in the battery cell 110 can be absorbed by the cooling member 500 and discharged. However, it is nearly impossible to design such that the cooling member 500 and the battery cell 110, which are coupled through assembly after being manufactured, are in complete contact within the battery pack 1000 or battery module 100, whereby typically, a separation space may be formed between the cooling member 500 and the battery cells 110. In this way, an air gap or an air pocket may be formed in the space generated between the cooling member 500 and the battery cell 110, whereby heat transfer from the battery cell 110 to the cooling member 500 may not be smooth, and the cooling efficiency of the cooling member 500 may be slightly reduced.

In order to overcome the decrease in cooling efficiency due to air pockets, etc., a method has been devised in which the above-mentioned separation space is filled with a thermal interface material (TIM) to form a heat transfer path. However, there was a problem that the overall production cost of the battery pack 1000 increased due to the cost of the heat dissipating interface material, and the production time of the battery pack 1000 increased due to the addition of processes. Accordingly, the battery module 100 or the battery pack 1000 of the present embodiment may be provided with cooling fins 600 to minimize the decrease in cooling efficiency due to the air gap.

On the other hand, although not specifically mentioned above, the battery pack according to one embodiment of the present disclosure may further include a battery management system (BMS) and/or a cooling device that controls and manages battery's temperature, voltage, etc.

The battery pack according to one embodiment of the present disclosure can be applied to various devices. For example, the device to which the battery pack is applied may be a vehicle means such as an electric bicycle, an electric vehicle, or a hybrid vehicle. However, the above-mentioned device is not limited thereto, and the battery pack according to the present embodiment can be used for various devices in addition to those illustrated above, which also falls within the scope of the present disclosure.

Although the invention has been shown and described in detail with reference preferred embodiments thereof, the scope of the present disclosure is not limited thereto, and various modifications and improvements can be made by those skilled in the art using the basic concepts of the present disclosure which are defined in the appended claims, which also fall within the scope of the present disclosure.

### [Description of Reference Numerals]

100: battery module
110: battery cell
120: battery cell stack
130: side surface plate
140: holding strap
150: busbar frame
200: pack frame
300: resin layer
400: end plate
500: cooling member
510: upper plate
520: lower plate
511, 521: groove
512, 522: edge part
523: fragile part
530: inlet/outlet port
540: upper structure
550: lower structure
560: sealing pad
541, 542, 551, 561, 562: vertical bar
543, 552: horizontal bar
544, 553, 563: edge part
600: cooling fin

## Claims

1. A cooling member mounted on a battery cell stack in which a plurality of battery cells are stacked, the cooling member comprising:
an upper plate, a lower plate, and a coolant embedded in an inner space between the upper plate and the lower plate; and
at least one of an upper structure supporting the upper plate and a lower structure supporting the lower plate,
wherein the upper plate and the lower plate are composed of a material that can be melted or broken when a thermal event occurs in the battery cell, and
wherein the upper structure and the lower structure are composed of materials that maintain rigidity when a thermal event occurs in the battery cell.

2. The cooling member according to claim 1, wherein:
the upper structure is mounted on the outer surface of the upper plate, and
the lower structure is mounted on the outer surface of the lower plate.

3. The cooling member according to claim 1, wherein:
in the upper plate, a portion not contacting with the upper structure forms a fragile part,
in the lower plate, a portion not contacting with the lower structure forms the fragile part, and
the fragile part is melted or broken when a thermal event of the battery cell occurs, thereby allowing the coolant to be injected into the battery cell.

4. The cooling member according to claim 1, wherein:
at least one of the upper plate and the lower plate is produced by plastic injection molding, and
at least one of the upper structure and the lower structure is composed of a metal material.

5. The cooling member according to claim 4, wherein:
at least one of the upper plate and the lower plate is composed of PP or PE, and
at least one of the upper structure and the lower structure is composed of stainless steel, aluminum, copper, or an alloy containing them.

6. The cooling member according to claim 1, wherein:
the upper structure comprises at least one of:
a vertical bar mounted in the vertical direction of the upper plate and disposed in parallel to the long side;
a horizontal bar mounted in the horizontal direction of the upper plate and disposed in parallel to the short side; and
an edge part mounted along the edge of the upper plate.

7. The cooling member according to claim 6, wherein:
the upper plate includes a groove on which the upper structure is mounted,
a step low in height is formed along the edge of the upper plate, and
the structure and shape of the upper structure and the structure and shape of the groove and the edge of the upper plate correspond and engage with each other.

8. The cooling member according to claim 7, wherein:
the grooves of the upper plate comprises:
a first groove formed in the center of the upper plate and disposed in parallel to a long side of the upper plate;
second grooves formed on both sides of the first groove and disposed in parallel to the long side of the upper plate; and
a third groove that intersects with the first groove and the second groove and is disposed in parallel to a short side of the upper plate.

9. The cooling member according to claim 8, wherein:
the vertical bar of the upper structure is mounted in the first groove and the second groove of the upper plate, and
the horizontal bar of the upper structure is mounted in the third groove of the upper plate.

10. The cooling member according to claim 8, wherein:
further comprising an inlet port and an outlet port through which a coolant flows in and out of a first short side among the two short sides of the cooling member,
wherein one end of the first groove of the upper plate contacts with the first short side, and
wherein the other end of the first groove of the upper plate is spaced apart from the second short side of the cooling member by a prescribed distance, so that the coolant flows in a U-shape in the inner space of the cooling member.

11. The cooling member according to claim 10, wherein:
both ends of the second groove of the upper plate are spaced from each of the first short side and the second short side by a prescribed distance, so that the coolant can flow in the inner space of the cooling member.

12. The cooling member according to claim 8, wherein:
the third groove of the upper plate and the horizontal bar of the upper structure are respectively configured in a plurality of numbers.

13. The cooling member according to claim 1, wherein:
the lower structure comprises at least one of:
a horizontal bar mounted in the horizontal direction of the lower plate and disposed in parallel to the long side;
a vertical bar mounted in the vertical direction of the lower plate and disposed in parallel to the short side; and
an edge part mounted along the edge of the lower plate.

14. The cooling member according to claim 13, wherein:
the upper plate includes a groove on which the lower structure is mounted,
a step low in height is formed along the edge of the lower plate, and
the structure and shape of the lower structure and the structure and shape of the groove and the edge of the lower plate correspond and engage with each other.

15. The cooling member according to claim 14, wherein:
the grooves of the lower plate comprises:
a fourth groove disposed in parallel to the long side of the lower plate; and
a fifth groove that intersects with the fourth groove and is disposed in parallel to the short side of the lower plate.

16. The cooling member according to claim 15, wherein:
the vertical bar of the lower structure is mounted in the fourth groove of the lower plate, and
the horizontal bar of the lower structure is mounted in the fifth groove of the upper plate.

17. The cooling member according to claim 16, wherein:
the fourth groove of the lower plate and the vertical bar of the lower structure are respectively configured in a plurality of numbers, or
the fifth groove of the lower plate and the horizontal bar of the lower structure are respectively configured in a plurality of numbers.

18. The cooling member according to claim 1,
further comprising a sealing pad disposed between the upper plate and the lower plate, so that the coolant does not leak to the outside of the cooling member.

19. The cooling member according to claim 18, wherein:
the lower plate, the lower plate, and the sealing pad are fastened by a rivet or a bolt together.

20. The cooling member according to claim 1, wherein:
the upper plate and the lower plate are integrally formed.

21. The cooling member according to claim 1, further comprising:
an inlet port through which the coolant flows into the inside of the cooling member, and
an outlet port through which the coolant flows out from the inside of the cooling member.

22. The cooling member according to claim 1, wherein:
the cooling member is mounted on the upper surface of the battery cell stack.

23. A battery pack comprising the cooling member according to claim 1.
